# EUROPÄISCHE PATENTANMELDUNG

(11) **EP 1 415 899 A2**
(43) Veröffentlichungstag der Anmeldung: **06.05.2004**
(21) Anmeldenummer: 03024706.8
(22) Anmeldetag: 28.10.2003
(51) Int. Cl.: B62J 1/00

(54) **Fahrradsattel**

(30) Priorität: 29.10.2002 DE 20216660 U
(71) Anmelder: RTI Sports Vertrieb von Sportartikeln GmbH, 56220 Urmitz (DE)
(72) Erfinder: Arnold, Franc, 56068 Koblenz (DE); Herold, David, 56073 Koblenz (DE)
(74) Vertreter: von Kirschbaum, Alexander, Dipl.-Ing.

(57) **Zusammenfassung**

Ein Fahrradsattel weist eine Sattelschale (10) auf. An einer Oberseite (12) der Sattelschale (10) ist ein Polsterteil (14) angeordnet. Über das Polsterteil (14) ist eine Deckschicht (16) gespannt. Zur Verbesserung des Sitzkomforts ist erfindungsgemäß in einem Schenkelanlagebereich (26) in den Seitenwänden (22) jeweils eine Öffnung (28) vorgesehen. Hierdurch wird die Elastizität des Sattels in diesem Bereich verbessert und Druck auf den nach innen weisenden Knochenansatz des Hüftgelenks, den trochander minor, erheblich reduziert.

## Beschreibung

Die Erfindung betrifft einen Fahrradsattel.

Fahrradsättel weisen eine üblicherweise aus hartem Kunststoff hergestellte Sattelschale auf. Auf der Oberseite der Sattelschale ist ein Polsterteil angeordnet. Das Polsterteil weist üblicherweise aufgeschäumtes Material auf. Ggf. ist zur Befestigung des Polsterteils an der Sattelschale eine das Polster überspannende Deckschicht vorgesehen. Die Deckschicht ist hierbei aus einem Material wie Nylon o.dgl., das eine hohe Widerstandsfähigkeit aufweist und üblicherweise feuchtigkeitsundurchlässig ist.

Zur Verbesserung des Sitzkomforts ist es bekannt, im Zentralbereich des Sattels einen in Längsrichtung verlaufenden Schlitz oder eine Vertiefung vorzusehen. Insbesondere bei langen Fahrradtouren ist auch das Sitzen auf derartigen Sätteln schmerzhaft.

Aus DE 100 33 793 A1 ist ein Fahrradsattel mit Ventilationsfunktion bekannt, der in der vorderen Hälfte des Fahrradsattels Lüftungsöffnungen aufweist, die über Kanäle mit einem in Längsrichtung verlaufenden Schlitz verbunden sind um den Genitalbereich eines Fahrradfahrers zu kühlen. Das Sitzen ist auch auf einem derartigen Fahrradsattel, insbesondere bei langen Fahrradtouren, schmerzhaft.

Aufgabe der Erfindung ist es, einen Fahrradsattel zu schaffen, bei dem der Sitzkomfort verbessert ist.

Die Lösung der Aufgabe erfolgt erfindungsgemäß durch die Merkmale des Anspruchs 1.

Der erfindungsgemäße Fahrradsattel weist in der Seitenwand der Sattelschale, d.h. einer von der Sitzfläche nach unten weisenden Seitenwand, eine Öffnung auf. Die in der Sattelschale vorgesehene Öffnung ist erfindungsgemäß im Schenkelanlagebereich vorgesehen.

Bei dem Schenkelanlagebereich handelt es sich um denjenigen Bereich des Sattels, an dem der Innenschenkel anliegt bzw. beim Treten abrollt bzw. reibt. Der Schenkelanlagebereich ist somit im Übergangsbereich zwischen einem Sitzbereich des Sattels und der Sattelspitze angeordnet. Die exakte Position und Ausdehnung des Schenkelanlagebereiches kann durch Versuche einfach bestimmt werden. Der Schenkelanlagebereich befindet sich von der Fahrradsattelspitze aus gesehen, größten Teils in der hinteren Hälfte des Fahrradsattels, insbesondere im dritten Viertel des Fahrradsattels.

Beispielsweise beginnt die Öffnung in dem Schenkelanlagebereich bei einem 270 mm langen Herrensattel bei 130 mm von der Sattelspitze aus gemessen und erstreckt sich über eine Länge von 70 mm. Somit ist der größte Teil der Öffnung in der hinteren Hälfte des Fahrradsattels angeordnet. Beispielsweise bei einem 250 mm langen Damensattel, beginnt die Öffnung im Schenkelanlagebereich von der Sattelspitze aus gemessen, nach 125 mm und erstreckt sich ebenfalls über eine Länge von 70 mm. Bei diesem Ausführungsbeispiel ist die Öffnung im Schenkelanlagebereich vollständig in der hinteren Hälfte des Fahrradsattels angeordnet. Je nach Ausführungsform des erfindungsgemäßen Fahrradsattels können die angegebenen Maße um ca. +/- 5% variieren. Die Länge der Öffnung entspricht vorzugsweise der Länge des Schenkelanlagebereichs oder ist beispielsweise um insbesondere bis zu 10% kleiner.

Das Verhältnis von der Sattellänge zur Öffnungslänge beträgt insbesondere zwischen 0,2 - 0,35 und vorzugsweise zwischen 0,25 - 0,3. Die Öffnung im Schenkelanlagebereich beginnt insbesondere bei 45 % - 55 % der Sattellänge von der Sattelspitze aus gemessen und endet vorzugsweise bei 70 % - 80 % der Sattellänge von der Sattelspitze aus gemessen.

Es wurde festgestellt, dass durch Vorsehen einer Öffnung in dem Schenkelanlagebereich der Seitenwand der Sattelschale bzw. vorzugsweise an den beiden einander gegenüberliegenden Seitenwänden der Sattelschale der Sitzkomfort verbessert ist. Dies liegt darin begründet, dass der menschliche Oberschenkelknochen kurz unterhalb des Hüftgelenks einen nach innen weisenden Knochenansatz, den trochanter minor, aufweist. Beim Treten drückt der trochanter minor im Sattelanlagebereich gegen den Sattel. Beim Treten erfolgt ein Abrollen über den trochanter minor und mit diesem verbundene Muskeln, Sehnen und Nerven. Hierdurch treten Spannungen und Drücke in den Muskeln und der Haut in diesem Bereich auf, die zu Schmerzen führen. Durch das erfindungsgemäße Vorsehen einer Öffnung in dem Schenkelanlagebereich kann der durch das Abrollen des trochanter minor hervorgerufene Druck erheblich reduziert und somit der Sitzkomfort verbessert werden.

Die Sattelschale ist mit einem Deckmaterial versehen. Hierbei kann es sich beispielsweise um ein Polsterteil handeln, das ggf. zusätzlich mit einer Deckschicht überspannt ist. Ebenso ist es auch möglich, ein anderes Deckmaterial vorzusehen, so dass eine zusätzliche Deckschicht nicht erforderlich ist.

Besonders bevorzugt ist es, dass sich die Öffnungen im Wesentlichen über den gesamten Abrollbereich des trochanter minor erstrecken. Dies hat den Vorteil, dass insbesondere bei der Richtungsumkehr der Abrollbewegung, bei der es sich um einen Moment der Bewegung handelt, der besonders hohen Belastungen ausgesetzt ist, kein Druck durch die Sattelschale erzeugt wird.

Um weiterhin eine Polsterung in diesem Bereich zu gewährleisten, erstreckt sich das Polsterteil vorzugsweise über die insbesondere in beiden Seitenwänden vorgesehenen Öffnungen. Bei einem Fahrradsattel, dessen Polsterteil zusätzlich von einer Deckschicht überspannt ist, erstreckt sich vorzugsweise auch die Deckschicht über die Öffnungen. Es ist auch möglich, dass sich nur die Deckschicht über die Öffnungen erstreckt und das Polsterteil im Bereich der Öffnungen nicht vorhanden ist. Ebenso ist es möglich, eine durchgehende Öffnung vorzusehen, die somit in der Sattelschale, im Polsterteil und in der Deckschicht vorgesehen ist.

Vorzugsweise ist an einer Innenseite der Sattelschale eine das Loch verschließende Schutzfolie vorgesehen. Bei der Schutzfolie kann es sich auch um die an der Innenseite entsprechend angeordnete Deckschicht, durch die das Polsterteil gehalten ist, handeln. Durch die Schutzfolie ist ein Eindringen von Feuchtigkeit in das Polsterteil vermieden. Anstatt die Schutzfolie oder ein ähnliches Schutzelement an der Innenseite der Sattelschale vorzusehen, kann diese auch an einer Oberseite der Sattelschale, d.h. an der in Richtung des Sitzpolsters weisenden Seite der Sattelschale, vorgesehen sein. Ebenso ist es möglich, die Schutzfolie o.dgl. zwischen den Innenseite und der Oberseite der Sattelschale vorzusehen. Eine weitere Möglichkeit, um das Eindringen von Feuchtigkeit in das Polsterteil zu vermeiden, besteht darin, das Polsterteil selbst zu beschichten, so dass das Polsterteil eine Art Versiegelung aufweist.

Nachfolgend wird die Erfindung anhand einer bevorzugten Ausführungsform unter Bezugnahme auf die anliegenden Zeichnungen näher erläutert.

Es zeigen:
- Fig. 1: eine schematische Draufsicht eines Fahrradsattels,
- Fig. 2: eine schematische Ansicht der Innenseite des Fahrradsattels im Schenkelanlagebereich und
- Fig. 3: eine Schnittansicht entlang der Linie III-III in Fig. 2.

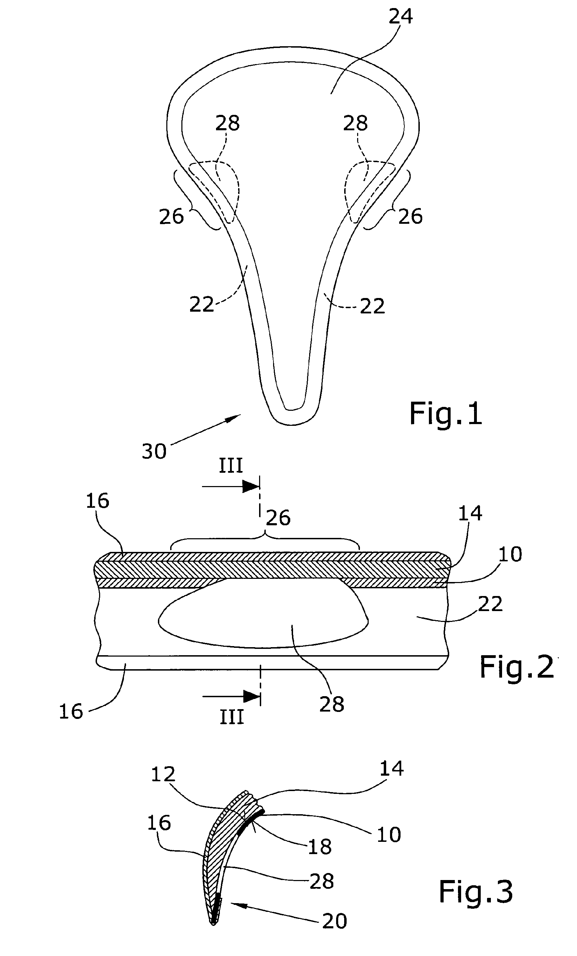

Ein Fahrradsattel weist eine aus Kunststoff bestehende Sattelschale 10 (Fig. 3) auf. An einer Oberseite 12 der Sattelschale 10 ist eine Polsterteil 14 angeordnet. Das Polsterteil 14 ist von einer Deckschicht 16 überspannt, wobei die Deckschicht 16 an einer Innenseite 18 der Sattelschale 10 im Randbereich 20, beispielsweise durch Festkleben, befestigt ist.

Die Sattelschale 10 (Fig. 2) weist zwei einander gegenüberliegende Seitenwände 22 auf. Die Seitenwände 22 sind die in Fig. 1 nach links und rechts weisenden, im Wesentlichen senkrecht zu einer Sitzfläche 24 verlaufenden Seitenwände 22. In einem Schenkelanlagebereich 26 weisen die Seitenwände 22 jeweils eine Öffnung 28 auf. Die beiden Öffnungen 28 sind einander gegenüberliegend angeordnet. Die Öffnungen 28, die in Richtung einer Sattelspitze 30 verlaufen und im Wesentlichen einen ovalen bzw. langgestreckten Querschnitt aufweisen, sind auf Höhe sowie im Bereich des trochanter minor des menschlichen Oberschenkelknochens, angeordnet. In dem Bereich 26 erfolgt das Abrollen über den trochanter minor.

An der Innenseite 18 der Sattelschale 10 kann eine Schutzfolie vorgesehen sein, die die Öffnungen 28 verschließt. Hierdurch ist ein Eindringen von Feuchtigkeit durch die Öffnungen 28 in das Polsterteil 14 und hierbei ein Beschädigen des Polsterteils 14 vermieden.

## Patentansprüche

1. Fahrradsattel, mit
einer Sattelschale (10) und
einem auf einer Oberseite (12) der Sattelschale (10) angeordneten Deckmaterial (14,16),
**dadurch gekennzeichnet, dass**
eine Seitenwand (22) der Sattelschale (10) in einem Schenkelanlagebereich (26) eine Öffnung (28) aufweist.

2. Fahrradsattel nach Anspruch 1, **dadurch gekennzeichnet, dass** beide Seitenwände (22) der Sattelschale (10) einander gegenüberliegende Öffnungen (28) aufweist.

3. Fahrradsattel nach Anspruch 1 oder 2, **dadurch gekennzeichnet, dass** sich das Deckmaterial (14,16) über die Öffnung (28) erstreckt.

4. Fahrradsattel nach einem der Ansprüche 1-3, **gekennzeichnet durch** eine ein Polsterteil (14) überspannende Deckschicht (16), die sich über die Öffnungen (28) erstreckt.

5. Fahrradsattel nach einem der Ansprüche 1-3, **dadurch gekennzeichnet, dass** sich die Öffnung (28) durch das Deckmaterial (14,16) erstreckt.

6. Fahrradsattel nach einem der Ansprüche 1-5, **dadurch gekennzeichnet, dass** sich die Öffnung (28) im Wesentlichen über den gesamten Abrollbereich des trochanter minor erstreckt.

7. Fahrradsattel nach einem der Ansprüche 1-6, **gekennzeichnet durch** eine die Öffnung (28) der Sattelschale (10) verschließende Schutzfolie.
